# EUROPEAN PATENT APPLICATION

(11) **EP 0 554 604 A1**
(43) Date of publication of application: **11.08.1993**
(21) Application number: 92306993.4
(22) Date of filing: 31.07.1992
(51) Int. Cl.: G01N 30/62

(54) **Calibration of analytical instruments**

(30) Priority: 04.02.1992 US 830646
(71) Applicant: THE STANDARD OIL COMPANY, Cleveland, Ohio 44114-2375 (US)
(72) Inventor: Belfer, Anatoly J., Bedford Heights, Ohio 44146 (US); Locke, David C., Brooklyn, New York 11217 (US)
(74) Representative: Crack, Richard David

(57) **Abstract**

A detector for a chromatograph using a first carrier is calibrated by eluting the component of interest from a dilution chromatographic column using a second carrier. The effluent is sampled and the peaks measured by the detector. The peaks from each sample are used to determine a proportion function for the detector. The neat value for the component of interest as predicted by the proportion function is then used to calibrate the detector.

## Description

### BACKGROUND OF THE INVENTION

This invention relates to a method for calibrating analytical instruments, in particular, chromatographs.

In a chromatographic process, components of a sample are moving through a chromatographic column by a fluid (liquid or gas) with different rates depending on their properties. This difference leads to separation of the components. Each components elutes from the column as a moving concentration zone that is registered by a detector as a chromatographic peak.

Each component causes a peak on the detector as it is eluted from the column over a period of time. The area under the peak is representative of the proportion of the sample constituted by a particular component.

In order to calibrate the detector so that the actual proportions can be measured, it is known to inject a calibration mixture having a known composition into the chromatograph to provide a calibrated detector response.

Unfortunately, it is often difficult to prepare such a mixture and, even if prepared correctly, it may change, for example, as components interact with the container walls.

U.S.S.R. Inventor's Certificate No. 188,133 describes a method for preparing a series of calibration mixtures consisting of a first carrier and a component of interest by using a second chromatograph that utilizes a second carrier. This second chromatograph must already be calibrated for the first carrier. This then allows the determination of the percentage of the first carrier with respect to the component of interest. This mixture is then used to calibrate the first chromatograph.

While allowing an unknown quantity of the component of interest to be used, it is still necessary to calibrate the second chromatograph for the first carrier by some other method.

### SUMMARY OF THE INVENTION

The present invention provides a method of calibrating an analytical chromatograph that uses a first carrier. The calibration is done without any pre-prepared calibration mixtures or pre-calibrated chromatographic detectors.

A plurality of samples are eluted from a dilution chromatographic column, each sample containing a second carrier and a component of interest in differing unknown proportions. The second carrier is different from the first carrier.

An area is measured for the second carrier peak and the component of interest peak of each sample with the analytical chromatograph.

A proportion function is determined that best fits the measured areas.

A neat value of the proportion function is determined for the component of interest.

A sample to be analyzed is injected into the analytical chromatograph, the sample to be analyzed containing the component of interest.

An area corresponding to the component of interest in the sample to be analyzed is calibrated by reference to the neat value.

In the preferred embodiment, the proportion function is a straight line and the area corresponding to the component of interest is calibrated by dividing the same by the neat value. The calibrated area then represents the proportion of the component of interest contained in the sample to be analyzed. Additional components of interest can be calibrated by successively eluting additional pluralities of samples, each additional plurality of samples containing an additional component of interest.

### BRIEF DESCRIPTION OF THE DRAWINGS

FIG. 1 is a block diagram of an apparatus for practicing a method according to the invention.

FIG. 2 is a graphical representation of the relationship between the areas under the peaks for a first carrier and a component of interest when detected by a chromatograph using a second carrier.

### DESCRIPTION OF THE PREFERRED EMBODIMENTS

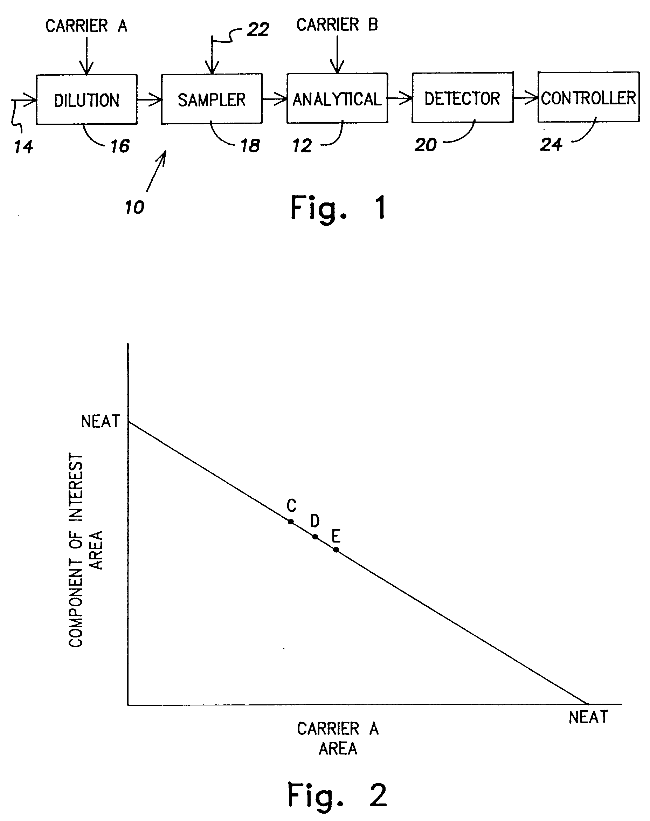

Referring to FIG. 1, an apparatus 10 for calibrating an analytical chromatograph made up of an analytical chromatographic column 12 and detector 20 is shown. An input 14 containing a component of interest is mixed with a carrier A in a dilution chromatographic column 16. The component of interest may be, for example, methane and the carrier A may be, for example, nitrogen gas.

As the component of interest (along with the carrier A) is eluted from the dilution chromatographic column 16, a sampler 18 provides successive samples of the effluent to the analytical chromatograph 12 where it is mixed with a carrier B, different from the carrier A. The carrier B may be, for example, helium. The sampler 18 may be, for example, a hand-operated valve, or in the preferred embodiment, an automatic valve controlled by a computer.

Each of the samples from the dilution chromatographic column 16 has a different proportion of the component of interest and the carrier A.

Each sample from the dilution chromatographic column 16, mixed with the carrier B, is eluted from the analytical chromatograph column 12 to the detector 20. The detector 20 will register two peaks, one for the component of interest and one for the carrier A.

As is well-known in the art, the area under each of these peaks is proportional to the amount of the substance causing the peak present in the sample.

Because successive samples have differing proportions of the component of interest and the carrier A, the pair of peaks for each sample will contain different areas.

The relationship or proportion function between the areas under the peaks of the component of interest and the carrier A can be expressed as illustrated in FIG. 2, where C, D and E represent exemplary sample measurements.

Theoretically, this relationship or proportion function will be linear, that is, a plot of the areas for successive samples will lie on the same straight line.

Once the areas of the samples have been measured, the straight line that best fits the points is determined. Such well-known methods as minimum mean square error can be used to determine the best straight line.

Even if the actual relationship is not a straight line, several samples may be taken around the area of interest and the response assumed to be linear in that area.

Once the proportion function is determined, then the neat values for the component of interest and the carrier A can be determined. These values are the intercepts of the proportion function and the respective axis. For example, the value of the proportion function for zero area of carrier A is the neat or 100% value of the area for the component of interest.

This neat value is used to calibrate the response of the detector 20. The neat value represents the area under the peak for a sample containing 100% of the component of interest.

A sample to be analyzed 22 containing a component of interest is injected into the analytical chromatographic column 12 from the sampler 18. The resulting area under the peak for the component of interest is measured by the detector 20. The percentage of the component of interest is found by dividing the observed area of the component of interest, as measured by the detector 20, by the neat value.

It is not necessary that the input 14 contain only the component of interest, as long as the component of interest can be separated by the dilution chromatographic column 16. In a similar manner, the analytical chromatograph 12 can also be calibrated for the other components in the input 14.

The method disclosed is applicable to any chromatographic system, whether gas or liquid. The detector 20 may be, for example, a thermal conductivity detector, flame ionization detector or other chromatographic detector.

The carrier A need not be totally different from the carrier B. Instead, the carrier A may be a mixture of the carrier B and a different carrier, for example, 90% carrier B and 10% of a different carrier. Because the carrier B is "invisible" to the analytical chromatograph 12, its presence merely scales the observed proportion function, but doesn't change the straight-line relationship between the proportions of the carrier A and the component of interest.

In the preferred embodiment, the area under the peaks is measured by a controller 24 which also determines the proportion function and controls the sampler 18. The controller 24 also uses the neat value to calibrate the analytical chromatograph for a component of interest. The controller 24 may be, for example, a general purpose computer or a dedicated micro-controller.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A method for calibrating an analytical chromatograph that uses a first carrier, comprising:
eluting a plurality of samples from a dilution chromatographic column, each sample containing a second carrier and a component of interest in differing unknown proportions, said second carrier being different from said first carrier;
measuring an area for a second carrier peak and a component of interest peak of each sample with said analytical chromatograph;
determining a proportion function that best fits said measured areas;
determining a neat value of said proportion function for said component of interest;
injecting a sample to be analyzed into said analytical chromatograph, said sample to be analyzed containing said component of interest; and
calibrating an area corresponding to said component of interest in said sample to be analyzed by reference to said neat value.

2. A method according to claim 1, wherein said proportion function is a straight line.

3. A method according to claim 2, wherein said area corresponding to said component of interest is calibrated by dividing the same by said neat value, said calibrated area representing the proportion of the component of interest contained in the sample to be analyzed.

4. A method according to claim 1, further comprising: successively eluting additional pluralities of samples, each additional plurality of samples containing an additional component of interest.

5. A method according to claim 1, wherein a portion of said second carrier is comprised of said first carrier.

6. An apparatus for calibrating an analytical chromatograph that uses a first carrier, comprising:
means for eluting a plurality of samples from a dilution chromatographic column, each sample containing a second carrier and a component of interest in differing unknown proportions, said second carrier being different from said first carrier;
means for measuring an area for a second carrier peak and a component of interest peak of each sample with said analytical chromatograph;
means for determining a proportion function that best fits said measured areas;
means for determining a neat value of said proportion function for said component of interest;
means for injecting a sample to be analyzed into said analytical chromatograph, said sample to be analyzed containing said component of interest; and
means for calibrating an area corresponding to said component of interest in said sample to be analyzed by reference to said neat value.
